**Europäisches Patentamt**

**European Patent Office**

**Office européen des brevets**

(19)

(11) Veröffentlichungsnummer : **0 185 953**
**B1**

(12) **EUROPÄISCHE PATENTSCHRIFT**

(45) Veröffentlichungstag der Patentschrift :
**15.03.89**

(21) Anmeldenummer : **85115045.8**

(22) Anmeldetag : **27.11.85**

(51) Int. Cl.⁴ : **F 15 B 15/10**, F 01 B 19/04,
F 04 B 43/08

(54) **Dehnzylinder mit elastisch veränderbarer Länge.**

(30) Priorität : **10.12.84 DE 3444978**
**03.07.85 DE 3523717**

(43) Veröffentlichungstag der Anmeldung :
**02.07.86 Patentblatt 86/27**

(45) Bekanntmachung des Hinweises auf die Patenterteilung : **15.03.89 Patentblatt 89/11**

(84) Benannte Vertragsstaaten :
**DE FR GB IT**

(56) Entgegenhaltungen :
**EP--A-- 0 123 558**
**DE--A-- 1 751 865**
**DE--A-- 2 412 458**
**DE--A-- 2 823 697**
**GB--A-- 971 556**
**GB--A-- 1 404 505**
**GB--A-- 1 488 232**
**GB--A-- 1 555 957**
**GB--A-- 2 100 826**
**US--A-- 3 839 945**
**PATENT ABSTRACTS OF JAPAN, Band 4, Nr. 179 ((M-46)[661], 11. Dezember 1980**

(73) Patentinhaber : **Daimler, Berthold Dr.**
**Hentzenallee 13**
**D-5630 Remscheid 11 (DE)**

(72) Erfinder : **Daimler, Berthold Dr.**
**Hentzenallee 13**
**D-5630 Remscheid 11 (DE)**

(74) Vertreter : **Weissenfeld-Richters, Helga, Dr.**
**Höhnerweg 2**
**D-6940 Weinheim/Bergstrasse (DE)**

**Beschreibung**

Die Erfindung betrifft einen Dehnzylinder, bestehend aus einem Hohlzylinder aus gummielastischem Werkstoff, der bei im wesentlichen nicht veränderbarem Querschnitt in seiner Länge elastisch veränderbar und stirnseitig durch ein ruhendes und ein relativ bewegliches Bodenteil verschlossen ist, wobei der enthaltene Freiraum durch eine Ein-/Austrittsöffnung wahlweise mit einem Anschluß für ein fließfähiges, druckbeaufschlagbares Medium oder der Atmosphäre verbindbar ist und wobei das relativ bewegliche Bodenteil als Antriebsstück ausgebildet und Führungsmitteln zur Bestimmung seiner dehnungsbedingten Bewegungsrichtung zugeordnet ist.

Ein solcher Dehnzylinder ist aus der US-A-3 839 945 bekannt. Die Führungsmittel bestehen dabei aus einem den Dehnzylinder außenseitig umschließenden Rohr, in welchem ein durch den Dehnzylinder verschiebbarer Kolben angeordnet ist. Die Verschiebung des Kolbens hat indessen eine gleitende Bewegung des Dehnzylinders auf der Innenwandung des Rohres zur Folge, was es reibungsbedingt schwierig macht, die tatsächliche Dehnung feinfühlig zu steuern und eine vorzeitige Beschädigung des aus gummielastischem Material bestehenden Dehnzylinders zur Folge haben kann.

Der Erfindung liegt die Aufgabe zugrunde, einen solchen Dehnzylinder derart weiter zu entwickeln, daß eine vorzeitige Schädigung des aus gummielastischem Werkstoff bestehenden Dehnzylinders vermieden wird.

Diese Aufgabe wird erfindungsgemäß bei einem Dehnzylinder der eingangs genannten Art dadurch gelöst, daß in die Wandung des Hohlzylinders sich im wesentlichen in Umfangsrichtung erstreckende, dehnungsarme Armierungselemente eingebettet sind, die einen axialen Abstand $s_o$ voneinander haben, wobei das Verhältnis (A) aus der Dicke der unbelasteten Wandung $t_G$ und der in radialer Richtung gemessenen Dicke $d_R$ der Armierungselemente größer ist als 2 und wobei das Verhältnis (B) aus dem axialen Abstand $s_o$ der Armierungselemente und deren in axialer Richtung gemessenen Durchmesser $d_A$ größer ist als 1, mit der Maßgabe, daß das Produkt aus den Verhältnissen (A)-(B) größer ist als 3. Auf einige vorteilhaft Ausgestaltungs- und Weiterbildungsformen sowie neue Anwendungsmöglichkeiten der Erfindung nehmen die Unteransprüche Bezug.

Mit Hilfe der Zeichnung wird die Erfindung nachfolgend weiter erläutert. Es zeigen :

Fig. 1 : Die Anordnung der Armierung in der Wandung eines Hohlzylinders
Fig. 2 : Doppelzylinder
Fig. 3 : Doppelzylinder
Fig. 4 : Zwillingszylinder
Fig. 5 : Pumpenkonstruktion mit zwei Dehnzylindern
Fig. 6 : Dehnzylinder mit Geradeaus-Durchströmung

Fig. 7 : Stoßdämpfer
Fig. 8 : Dehnzylinder mit Kolbenpumpe
Fig. 9 : Dehnzylinder-Pulsationsdämpfer mit Trennmembran
Fig. 10 : Dehnzylinder mit Faltenbalg
Fig. 11 : Mehrzweck-Dehnzylinder mit Kolben und Zylinder
Fig. 12 : Pumpenkonstruktion mit zwei Dehnzylindern und Kolben
Fig. 13 : Zylinder-Kolben-Einheit mit Dehnzylinder-Abdichtung
Fig. 14 : Doppelt wirkende Dehnzylinder-Hubeinheit
Fig. 15 : Dehnzylinder-Membran-Pumpe
Fig. 16 : Ausgestaltung und Befestigung der Zylinderenden
Fig. 17 : Dehnzylinder mit Anschlag zur Kurvenführung
Fig. 18 : Dehnzylinder mit Führungsschiene
Fig. 19 : Dehnzylinder mit Spannelement
Fig. 20 : Dehnzylinder mit Speichen, Rollen und Leitschienen
Fig. 21 : Gegensinnig vorgekrümmter Dehnzylinder
Fig. 22 : Räumlicher Manipulator

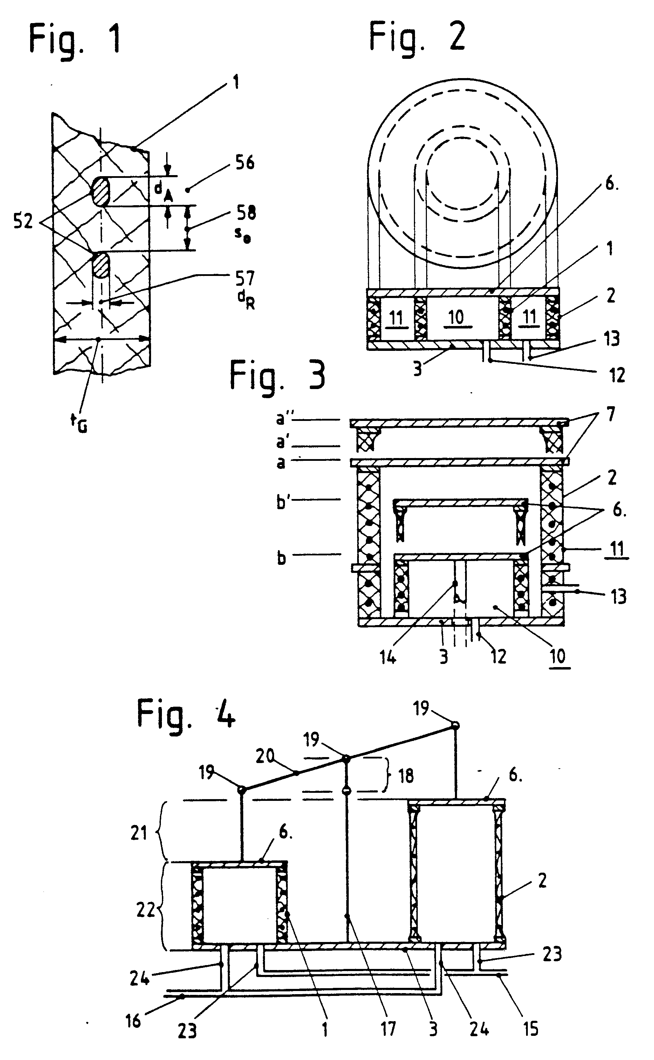

Da bei den nachfolgend erläuterten Ausführungsbeispielen der Erfindung im allgemeinen nicht näher auf die Armierung eingangen wird, seien einige Anmerkungen hierzu vorangestellt. Dehnzylinder des axialelastischen Typs werden gegen eine Veränderung des Querschnittes durch in Umfangsrichtung orientierte, mitbewegte, dehnungsarme Armierungselemente geschützt. Man unterscheidet die gegen inneren Überdruck wirksame Zugarmierung und eine gegen äußeren Überdruck wirksame Druckarmierung. Letztere ist auch geeignet, Einschnürungen des Dehnzylinders zu begrenzen, wenn dieser durch äußere Kräfte in die Länge gezogen wird. Gegen abwechselnden Überdruck von innen und von außen wirkt eine Kombination von Zug- und Druckarmierung. Die gleiche Wirkung erzielt man auch durch eine sog. Steifarmierung, d. h. eine in die Elastomerwand eingebettete Armierung aus zug- und biege- bzw. schubsteifem Werkstoff. Es gelten hierfür im Zusammenhang mit der Fig. 1 die folgenden Bemessungsregeln :

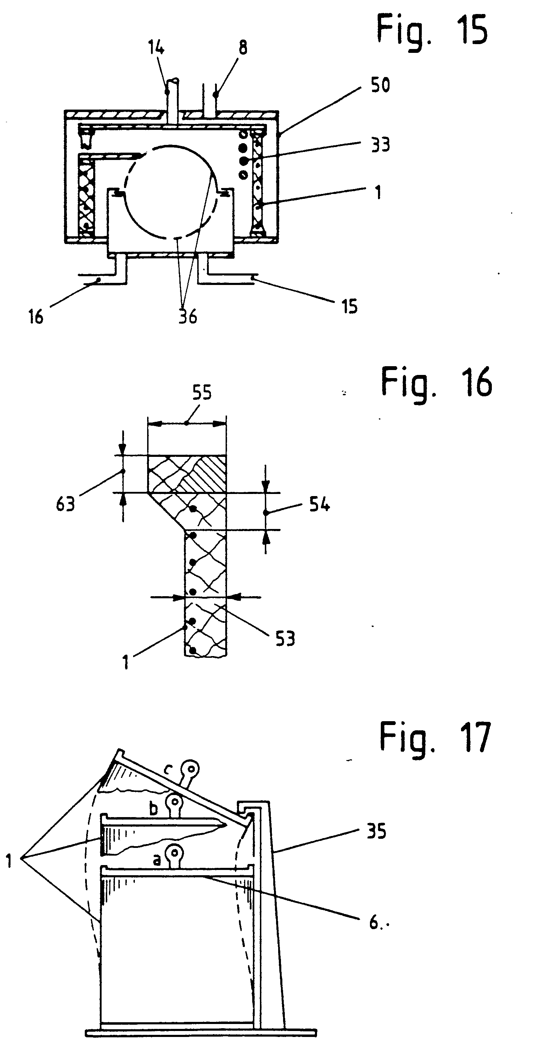

Es wurde gefunden, daß es zur Vermeidung vorzeitiger Schädigung des Elastomers bei im Inneren eingebetteter Armierung bestimmte geometrische Relationen einzuhalten gilt. Diese werden anhand von Fig. 16 erläutert, die einen Wandabschnitt eines Dehnzylinders 1 darstellt. Die Dicke der unbelasteten Gummiwand ist mit $t_G$ bezeichnet, der in radialer Richtung gemessene Durchmesser der Armierungselemente mit $d_R$ (57), ihr axial gemessener Durchmesser mit $d_A$ (56) und der axiale Abstand der Armierungselemente 52 $s_o$ (58). Vorteilhaft soll das Verhältnis $t_G : d_R$ größer sein als 2 bis 3 und das Verhältnis $s_o : d_A$ größer sein als 1, vorzugsweise größer als 2. Ferner sind Anordnungen bevorzugt, bei denen

$t_G : d_R \times s_o : d_A$ größer als 3 ist. Diese Abstimmungsregel wird bei den nachfolgend beschriebenen Ausführungen stets eingehalten.

Fig. 2 zeigt in Draufsicht und im Schnitt zwei konzentrisch angeordnete und miteinander über eine gemeinsame Endplatte 3 und 6 verbundene Hohlzylinder 1 und 2. Die beiden Innenräume 10 und 11 haben Zuleitungen 12 und 13. Bei Dehnung eines der Hohlzylinder 1 oder 2 durch Druckfüllung dehnt sich zwangsläufig der andere mit, so daß die Anordnung als Pumpe bzw. als Drucküber- oder Untersetzer dienen kann.

Auch die Fig. 3 gibt eine Vorrichtung mit zwei konzentrischen Hohlzylindern 1 und 2 wieder. Wird der äußere Hohlzylinder 2 unter Druck gesetzt (Gas, Flüssigkeit), so dehnt er sich aus, und sein bewegliches Bodenteil 7 hebt sich beispielsweise von Pos. a nach a'. Der Überdruck im Freiraum 11 wirkt zunächst auch auf den inneren Hohlzylinder 1 als äußerer Überdruck. Wird der innere Hohlzylinder 1 nun mit einem Druckmedium gefüllt oder durch eine Stange 14 von b nach b' gedehnt, so bewirkt das zugleich auch eine weitere Dehnung des äußeren Hohlzylinders von a' nach a'', übermittelt durch das darin befindliche Medium. Dessen Einfülldruck und Kompressibilität bestimmen neben den Federraten der beiden Hohlzylinder die Gesamtcharakteristik des Speichers bzw. der Feder von Fig. 3, die somit im Betrieb verstellbar ist.

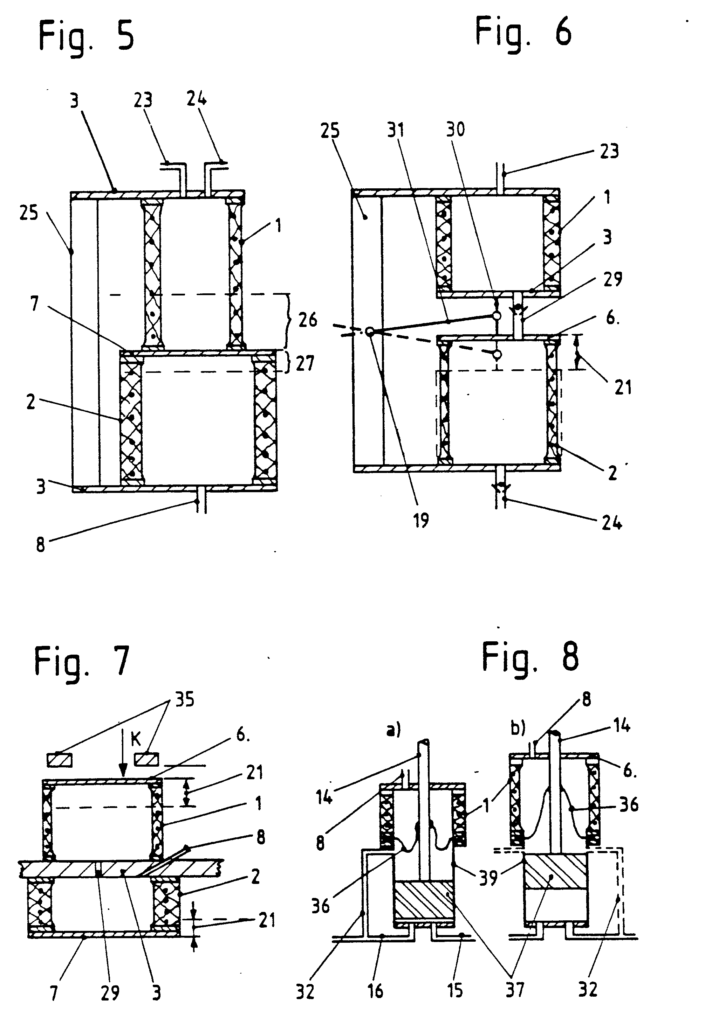

Paarweise einander zugeordnete Hohlzylinder können als Pumpenkonstruktion ausgebildet werden, indem beide Hohlzylinder als Tandem wirken, wobei dann ein Außenantrieb erforderlich ist, oder indem ein Hohlzylinder als motorisches Antriebsmittel und der andere als pumpendes Arbeitsmittel dienen kann. Einige Ausführungsbeispiele zeigen die Figuren 4 bis 6.

In Fig. 4 sind zwei auf einer Grundplatte 3 nebeneinander mit einigem Zwischenraum befestigte Hohlzylinder 1 und 2 jeweils an einer Druckleitung 15 und einer Saugleitung 16 vorzugsweise über Einwegventile angeschlossen. Die beweglichen Bodenteile 6 sind über Gelenke 19 an einem mittig gelagerten Schwenkbalken 20 befestigt. Wird das Balkenlager 19 mit Hilfe der Stütze 17 um die Ausfahrlänge 18 angehoben, so werden bei gleicher Dimensionierung beide Hohlzylinder um den Betrag 18 gedehnt bzw. vorgespannt. 2 x 18 ist dann der Gesamthub 21 jedes der Hohlzylinder, ihre ungedehnte Länge ist mit 22 bezeichnet. Durch Schwenkbewegung des Balkens 20 um seinen Schwenkpunkt 19 läßt sich diese Einrichtung als Pumpe verwenden. Die beiden Zylinder 1 und 2 müssen nicht gleich groß sein, sondern können in Größe und Hub voneinander abweichen bei entsprechender Anpassung des Schwenkantriebes. Vertauscht man Druck- und Saugleitung und sorgt für Hubabhängige Steuerung der Ventile, so kann die in Fig. 4 gezeigte Anordnung aber auch als pneumatischer bzw. hydraulischer Zweikolben-Motor dienen.

In Fig. 5 sind zwei ungleiche Hohlzylinder 1 und 2 übereinander angeordnet und durch einen gemeinsamen beweglichen Bodenteil 7 verbunden.

Die einseitig verlängerten, ruhenden Bodenteile sind mit den Enden einer Traverse 25 so verbunden, daß beide Hohlzylinder sich gegenseitig vorspannen. Der Vorspannhub vom Hohlzylinder 1 ist größer als der vom Hohlzylinder 2, wie durch 26 und 27 angedeutet. Der untere Hohlzylinder 2 wird über die Zuleitung 8 mit einem Druckmedium abwechselnd gefüllt und entleert. Der zulässige Hub entspricht dem Vorspannhubbetrag 26 und ist zugleich Förderhub des pumpend wirkenden Hohlzylinders 1.

In Fig. 6 ist eine ähnlich aufgebaute Pumpe dargestellt, bei der jedoch die beiden Hohlzylinder 1 und 2 vom Fördermedium durchströmt werden, und zwar ohne Richtungsumkehr. Die einander zugekehrten Bodenteile 3 und 6 sind durch eine Koppelstange 30 verbunden und durch einen Schwenkhebel 31, der um sein an der Traverse 25 angeordnetes Schwenklager 19 schwingt, gemeinsam auf und ab beweglich. Der untere Hohlzylinder 2 ist mit einem Sauganschluß 24 mit Rückschlagventil ausgestattet und dient als Pumpenkammer. Das zum oberen Hohlzylinder 1 führende Verbindungsrohr 29 ist ebenfalls mit einem Rückschlagventil versehen und dient als Druckstutzen. Der Innenraum des oberen Hohlzylinders 1 dient als Ausgleichsraum für das ihn durchfliessende Fördermedium.

Bedingt durch die Art der Bewegungskopplung verlaufen die in Fig. 4 und 6 dargestellten Axialbewegungen der Hohlzylinder 1 und 2 nicht geradlinig, sondern auf einer zweidimensional gekrümmten Bahn.

Fig. 7 zeigt eine Hohlzylinderkonstruktion als Stoßdämpfer oder Federelement. Über einem ruhenden Bodenteil 3 ist ein schwächer dimensionierter Hohlzylinder 1 und unterhalb desselben ein stärker bemessener Hohlzylinder 2 angeordnet. Durch die Öffnung 29 sind sie miteinander verbunden. Anschluß 8 gibt die Möglichkeit, die beiden Hohlzylinder nach Bedarf unter Druck zu setzen. Hierbei erfährt der obere Hohlzylinder 1 einen Vorspannhub 21, der für von oben einwirkende Kräfte K als Federhub in Bezug auf die Platte 34 zur Verfügung steht. Die dehnelastische Federkraft wird von dem unteren Hohlspeicher 2 zur Verfügung gestellt, Rückschwingungen können durch Anschläge 35 für das bewegliche Bodenteil vom Hohlzylinder 1 begrenzt werden.

Fig. 8 stellt eine Kombination aus einer Kolbenpumpe und einem Hohlzylinder 1 mit einer Membran zu einer völlig leckfreien Dosierpumpe dar. Die Membran 36 ist mit der Stange 14 des Kolbens 37 dichtend fest verbunden und trennt zwei auf gleichem Druck befindliche Flüssigkeiten voneinander, nämlich einerseits das über die Austauschleitung 32 bzw. über den Ringspalt zwischen Kolben 37 und Zylinder 39 eingedrungene Fördermedium, andererseits eine über den Stutzen 8 eingefüllte, für das Elastomer inerte Übertragungsflüssigkeit.

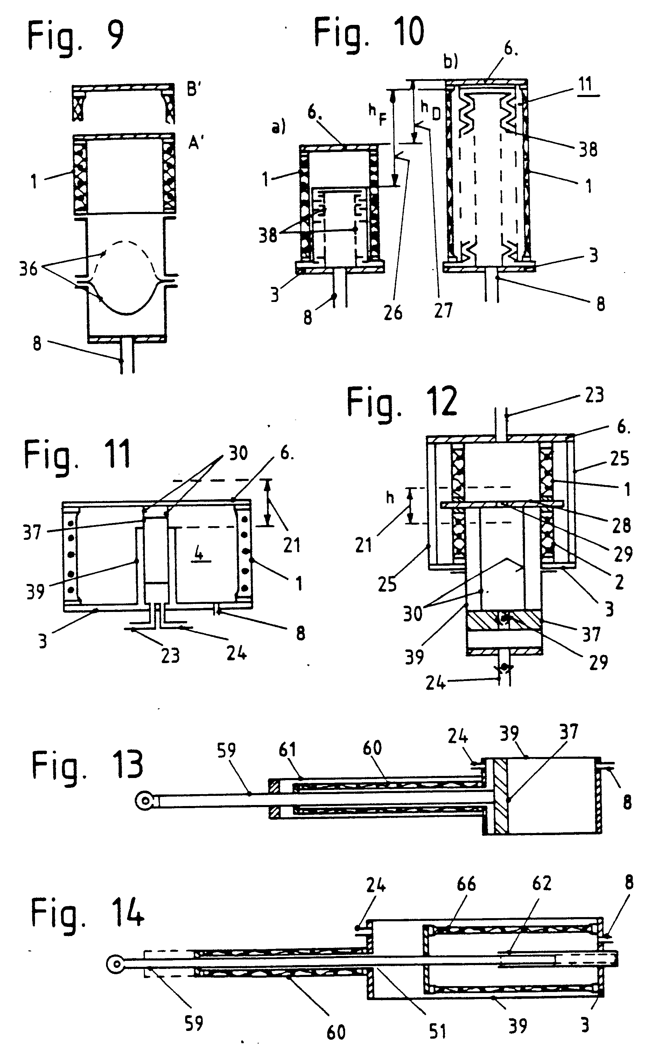

Die Figuren 9 und 10 zeigen zwei Druckspeicher, vorzugsweise zur Pulsationsdämpfung. Die Speicherfunktion übernimmt jeweils ein Hohlzylinder 1. Um diesen gegen das ggf. aggressive Medium aus der Zuleitung 8 abzuschirmen, dient in Fig. 9 eine drucklos betriebene Membran 36 als Trennorgan. A und B bzw. A' und B' geben die leere bzw. gefüllte Position des Druckspeichers an.

Bei der Ausführung nach Fig. 10 a) und b) ist statt der Membran ein Faltenbalg, Faltzylinder oder Wellenzylinder 38 vorgesehen. Der Deckel des Faltenbalges kann mit dem beweglichen Bodenteil 6 des Hohlzylinders 1 fest verbunden sein. Soll der Faltenbalg indessen drucklos betrieben werden, so ist, wie dargestellt, der Freiraum 11 zwischen Faltenbalg 38 und Hohlzylinder 1 mit einer Übertragungsflüssigkeit zu füllen. Der Hub 26 des Faltenbalges ist wegen dessen geringerem Wirkungsquerschnitt größer als der Hub 27 des Hohlzylinders 1.

Fig. 11 gibt eine Pumpe wieder, bei der ein Kolben 37 mit dem beweglichen Bodenteil 6 eines Hohlzylinders 1 größeren Durchmessers über Koppelstangen 30 starr verbunden ist. Das Zylinder-Kolben-Aggregat 37, 39 wird dadurch betrieben, daß der Innenraum 4 des Hohlzylinders 1 über Anschluß 8 durch Druckluft expandiert wird und sich nach Druckentlastung wieder zurückdehnt. Bei entsprechender Abänderung der Anschlüsse kann der Kolben auch hydraulisch als Antrieb dienen und der Hohlzylinder als Pumpenkammer verwendet werden. Das Druckübersetzungsverhältnis bei der jeweiligen Betriebsweise ergibt sich aus dem Verhältnis der Querschnitte von Kolben 37 und Hohlzylinder 1.

Die Pumpenanordnung nach Fig. 12 enthält erfindungsgemäße Merkmale der Figuren 6 und 8. Sie stellt eine ohne Richtungsumkehr durchströmte, hermetisch geschlossene Kolbenpumpe dar. Um den Pumpenhub 21 auszuführen, muß die Verbindungsplatte 28 durch einen von außen wirkenden Antrieb alternierend bewegt werden.

Die Figuren 13 und 14 zeigen Beispiele für einen pneumatischen oder hydraulischen Arbeitszylinder. In Fig. 13 gleitet ein Kolben 37 in einem mit zwei Anschlüssen 8, 24 versehenen Zylinder 39. Die Kolbenstange 59 ist durch eine Hülse 61 mittels eines nicht abdichtenden Gleitlagers geführt. Ein Hohlzylinder geringen Querschnitts 60 sorgt für die Abdichtung nach außen dadurch, daß er einerseits an der Kolbenstange 59, andererseits an dem kolbenstangenseitigen Boden des Zylinders 39 befestigt ist. Die Fig. 13 zeigt den Dichtzylinder 60, der sich wie der Kolben 37 bewegt, in der am weitesten gedehnten Position.

Die Ausführung der Fig. 14 hat ebenfalls zwei Druckkammern mit den Anschlüssen 8, 24 zur druckabhängigen Bewegung der Kolbenstange 59. Statt des Kolbens 37 weist sie jedoch einen Dehnzylinder 66 auf, der einen wesentlich größeren Durchmesser aufweist als der Dichtungs-Dehnzylinder 60 und der in dem starren Zylinder 39 untergebracht ist. Der ruhende Bodenteil 3 des Antriebszylinders 66 fällt mit dem kolbenstangenabgewandten Boden des Zylinders 39 zusammen, der andere, von der Kolbenstange 59 zentral durchdrungene Boden ist mit dieser dichtend fest verbunden. Der Zylinder 39 weist an seinem einen Boden ein Gleitlager 51, an dem gegenüberliegenden Boden eine Führungshülse 62 für die Kolbenstange 59 auf.

Die Kombination eines Hohlzylinders mit einem starren Druckraum zeigt auch die in Fig. 15 dargestellte Pumpe. Der durch eine Schraubenfeder 33 vorgespannte Hohlzylinder 1 wird durch pulsierenden Überdruck in dem mit der Zuleitung 8 versehenen Behälter 50 angetrieben. Die resultierende Pumpwirkung in dem Innenraum 4 des Dehnzylinders 1 wird durch die wiederum drucklos betriebene Membran 36 auf das Fördermedium übertragen. Der Antrieb des Hohlzylinders 1 kann alternativ auch mechanisch über die Stange 14 erfolgen. In diesem Fall kommen die Vorspannfeder 33 und das Außengehäuse 50 zur Vereinfachung in Wegfall. In dieser Ausführung kann die in Fig. 15 dargestellte Anordnung aber auch als Hydromotor betrieben werden. Hierbei wird der Hohlzylinder 1 durch rhythmisch wechselnden Druck einer über Anschlüsse 15, 16 zu resp. abgeführten Druckflüssigkeit hin- und her bewegt und überträgt seine Axialbewegungen auf die Hubstange 14, die eine Kurbel antreiben kann. Wiederum hat die Membran 36 die Aufgabe, eine Berührung des Elastomers des Hohlzylinders 1 mit der Druckflüssigkeit, z. B. Hydrauliköl zu verhindern.

Die Figur 16 nimmt bezug auf Abmessungsvorschläge für die adhäsive Verbindung der Hohlzylinderenden mit flanschförmig ausgebildeten Bodenteilen aus Metall oder Kunststoff entsprechender Festigkeit. 53 ist die Wandstärke des Dehnzylinders 1. Vorteilhaft ist das Maß 54 etwa gleich wie 53, und das Maß 55 etwa doppelt so groß. Soll der Flansch ganz aus Gummi bestehen und durch einen Spannring gehalten werden, so ist es zur sicheren Aufnahme der Dehnkräfte vorteilhaft, wenn das Maß 63 ebenfalls etwa gleich groß ist wie 53. Benutzt man anstelle oder zusätzlich zu einer solchen Einspannung eine Vulkanisationsverbindung, beispielsweise mit einem Ring der Breite 55, so kann dessen Dicke 63 den statischen Erfordernissen entsprechend auch geringer sein als das Maß 53. Übrigens kann es zweckmäßig sein, einen Flansch nach außen und den entgegengesetzten Flansch in das Innere des Dehnschlauches zu richten.

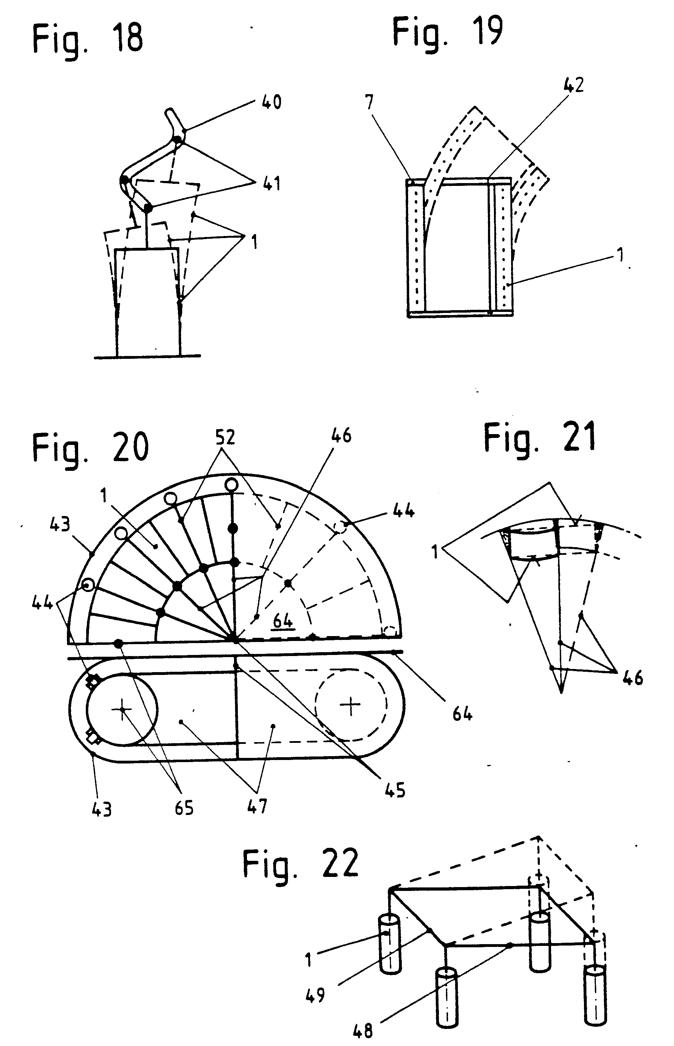

Die Figuren 17 bis 22 zeigen Vorkehrungen zur Ausführung mehrdimensionaler Bewegungen von Hohlzylindern. Fig. 18 zeigt einen Dehnzylinder 1 mit beweglichem Bodenteil 6, an dem eine Stange mit einer Anschlußöse befestigt ist. Ein Anschlag 35 ist so angebracht, daß er nach einem zunächst geraden Anfangshub des Hohlzylinders 1 mit dessen Deckel 6 in Kontakt kommt und dadurch eine weitere Dehnung auf dieser Seite des Hohlzylinders verhindert. Bei fortgeführter Drucksteigerung in dem Hohlzylinder 1 führt der bewegliche Bodentel 6 eine seitliche Schwenkbewegung aus. Die verschiedenen Positionen der Anschußöse werden durch a, b und c markiert.

In Fig. 18 ist der Hohlzylinder 1 über Führungsstücke 41 mit einer Führungsschiene oder -kurve derart verbunden, daß das freie Hohlzylinderende in seinen Bewegungen der Führungsschiene 40 folgt.

In Fig. 19 ist ein axialelastischer Hohlzylinder dargestellt, der sich bei Erhöhung des Fülldruckes gleichzeitig dehnt und seitlich krümmt. Dies wird dadurch erreicht, daß auf der Innenseite des Hohlzylinders 1 ein Spannelement 42 verlegt ist, welches die beiden Bodenteile 6.7 des Dehnzylinders 1 miteinander verbindet. Der Bewegungsablauf des beweglichen Hohlzylinderendes kann durch die Plazierung des Spannelementes bzw. eine Kombination von Spann-Hilfsmitteln in weiten Bereichen verändert bzw. beeinflußt werden.

Fig. 20 zeigt mögliche Ausführungsformen zum Erzielen einer Kreisbahn des freien Hohlzylinderendes. Dadurch entstehen hermetische, selbstrückstellende Schwenkantriebe für Pneumatik und Hydraulik. So kann der Hohlzylinder 1 auf einer Grundplatte 64 befestigt sein, in der in einiger Entfernung vom Mittelpunkt 65 der Hohlzylindergrundfläche ein Schwenkpunkt oder Schwenklager 45 vorgesehen ist. Von diesem gehen eine oder mehrere mit dem Hohlzylinder oder mit dem Dehnzylinderende verbundene, schwenkbare Speichen 46 aus, die den Hohlzylinder bei seiner Bewegung führen. Eine andere Möglichkeit besteht darin, Leitrollen oder Gleitelemente 44 an dem Hohlzylinder anzubringen, die durch Leitschienen oder Gleitflächen 43 geführt werden. Die Führung des freien Endes sowie aller Abschnitte des Hohlzylinders kann auch durch Kombination der zuvor beschriebenen Einrichtungen bewirkt werden. In jedem Fall muß, wie in Fig. 20 durch die Anordnung der Leitschienen 43 verdeutlicht wird, auch dafür Sorge getragen werden, daß der Schwenkzylinder unter der Einwirkung von Gegenkräften auf sein bewegliches Ende nicht aus der Schwenkebene heraus ausweichen kann.

Fig. 21 weist auf die Möglichkeit hin, bei einem an Speichen 46 geführten Hohlzylinder 1 diesem in seiner voll gedehnten Lage eine gerade zylindrische Form zu geben. Dies wird dadurch erreicht, daß der Hohlzylinder 1 gegensinnig vorgekrümmt an den Speichen 46 befestigt wird.

Einen räumlichen Manipulator zeigt Fig. 22. Mehrere Hohlzylinder 1 greifen ggf. starr an den Ecke eines Manipulierrahmens 48, 49 an und bringen diesen durch unterschiedlich starke Füllung der einzelnen Hohlzylinder 1 in die gewünschte Positionen.

Bezugszeichenaufstellung

1. Dehnzylinder, Dehnspeicher
2. Dehnzylinder, Dehnspeicher
3. ruhendes Bodenteil
6. bewegliches Bodenteil
7. bewegliches Bodenteil
10. Freiraum
11. Freiraum
12. Ein-/Austrittsöffnung
13. Ein-/Austrittsöffnung
14. Hubstange
15. Druckleitung
16. Saugleitung
17. Ständer
18. Ausfahrlänge
19. Schwenkpunkt
20. Schwenkbalken
21. Hub
22. Ausgangslänge
23. Druckanschluß
24. Sauganschluß
25. Traverse, Säule
26. Hub
27. Hub
28. Anschlußplatte
29. Verbindungsrohr, Verbindungsleitung
30. Koppelstange
31. Koppelhebel, Schwenkhebel, Antriebshebel
32. Ausgleichsleitung
33. Druckfeder, Schraubenfeder
34. Basis
35. Anschlag
36. Membran
37. Kolben
38. Faltenbalg, Wellenzylinder
39. Zylinder, starr
40. Führungsschiene, Führungskurve
41. Führungsstück
42. Spannelement
43. Leitschiene
44. Leitrolle, Gleitstück
45. Schwenkpunkt, Schwenklager, Achse
46. Speiche
47. Dehnkörper, gekrümmter Dehnzylinder
48. Verbindungsstange
49. Verbindungsstange
50. Behältnis
51. Gleitlager
52. Armierung
53. Gummidicke $t_G$, Wanddicke des Dehnzylinders
54. Abschrägungshöhe $h_i$
55. Flanschbreite T, Berührungsbreite
56. Querschnittslänge $d_A$
57. Querschnittsbreite $d_R$
58. lichter Abstand $s_o$
59. Kolbenstange
60. Dichtzylinder, Dehnzylinder mit geringem Durchmesser
61. Hülse mit Gleitlager
62. Führungshülse
63. Flanschdicke, Dicke des Gummiflansches oder Halteringes
64. Grundplatte
65. Flächenmittelpunkt
66. Dehnzylinder mit größerem Durchmesser, Antriebszylinder.

**Patentansprüche**

1. Dehnzylinder, bestehend aus einem Hohlzylinder (1, 2) aus gummielastischem Werkstoff, der bei im wesentlichen nicht veränderbarem Querschnitt in seiner Länge elastisch veränderbar und stirnseitig durch ein ruhendes (3) und ein relativ bewegliches Bodenteil (6, 7) verschlossen ist, wobei der enthaltene Freiraum (10, 11) durch eine Ein-/Austrittsöffnung (12, 13) wahlweise mit einem Anschluß für ein fließfähiges, druckbeaufschlagbares Medium oder der Atmosphäre verbindbar ist und wobei das relativ bewegliche Bodenteil (6, 7) als Antriebsstück ausgebildet und Führungsmitteln zur Bestimmung seiner dehnungsbedingten Bewegungsrichtung zugeordnet ist, dadurch gekennzeichnet, daß in die Wandung des Hohlzylinders (1) sich im wesentlichen in Umfangsrichtung erstreckende, dehnungsarme Armierungselemente (52) eingebettet sind, die einen axialen Abstand $s_o$ (58) voneinander haben, wobei das Verhältnis (A) aus der Dicke der unbelasteten Wandung $t_G$ und der in radialer Richtung gemessenen Dicke $d_R$ (57) der Armierungselemente (52) größer ist als 2 und wobei das Verhältnis (B) aus dem axialen Abstand $s_o$ (58) der Armierungselemente (52) und deren in axialer Richtung gemessenem Durchmesser $d_A$ (56) größer ist als 1, mit der Maßgabe, daß das Produkt aus den Verhältnissen (A)-(B) größer ist als 3.

2. Dehnzylinder nach Anspruch 1, dadurch gekennzeichnet, daß die Armierungselemente (52) zugsteif gegen inneren Überdruck ausgebildet sind.

3. Dehnzylinder nach Anspruch 1, dadurch gekennzeichnet, daß die Armierungselemente (52) drucksteif gegen äußeren Überdruck ausgebildet sind.

4. Dehnzylinder nach Anspruch 1, dadurch gekennzeichnet, daß die Armierungselemente (52) zug- und drucksteif gegen abwechselnden Überdruck von innen und außen ausgebildet sind.

5. Dehnzylinder nach Anspruch 1 bis 4, gekennzeichnet durch seine Verwendung als Druckspeicher.

6. Dehnzylinder nach Anspruch 1 bis 4, gekennzeichnet durch seine Verwendung als Pulsationsdämpfer.

7. Dehnspeicher nach Anspruch 1 bis 4, gekennzeichnet durch seine Verwendung als motorisches Antriebsmittel.

8. Dehnzylinder nach Anspruch 1 bis 4, gekennzeichnet durch seine Verwendung als pumpendes Arbeitsmittel.

9. Dehnzylinder nach Anspruch 1 bis 4, gekennzeichnet durch seine Verwendung als Druckübersetzer.

10. Dehnzylinder nach Anspruch 1 bis 4, gekennzeichnet durch seine Verwendung als Manipulator.

11. Dehnzylinder nach Anspruch 1 bis 4, gekennzeichnet durch seine Verwendung als Stoßdämpfer.

12. Dehnzylinder nach Anspruch 1 bis 4, gekennzeichnet durch seine Verwendung als Federelement.

13. Dehnzylinder nach Anspruch 1 bis 4, gekennzeichnet durch seine Verwendung als Kompensator.

14. Dehnzylinder nach Anspruch 5 bis 13, gekennzeichnet durch die Verwendung in einer Anordnung, in der wenigstens ein weiterer Dehnzylinder vorgesehen ist.

15. Dehnzylinder nach Anspruch 14, dadurch gekennzeichnet, daß der weitere Dehnzylinder durch den Dehnzylinder dehnbar ist.

16. Dehnzylinder nach Anspruch 14, dadurch gekennzeichnet, daß der weitere Dehnzylinder und der Dehnzylinder unabhängig voneinander dehnbar sind.

## Claims

1. Expanding cylinder consisting of a hollow cylinder (1, 2) made of elastomeric material, which, whilst of essentially invariable cross-section, is variable elastically in terms of its length and is closed on the end faces by means of a stationary bottom part (3) and a relatively movable bottom part (6, 7), the contained free space (10, 11) being connectable by means of an inflow/outflow orifice (12, 13) selectively to a connection for a flowable medium subjectable to pressure or the atmosphere, and the relatively movable bottom part (6, 7) being designed as a drive piece and being assigned to guide means for determining its direction of movement caused by expansion, characterized in that embedded in the wall of the hollow cylinder (1) are low-expansion reinforcing elements (52) which extend essentially in the circumferential direction and which are at an axial distance $s_o$ (58) from one another, the ratio (A) of the thickness of the nonloaded wall $t_G$ and the radially measured thickness $d_R$ (57) of the reinforcing elements (52) being higher than 2, and the ratio (B) of the axial distance $s_o$ (58) of the reinforcing elements (52) and their axially measured diameter $d_A$ (56) being higher than 1, provided that the product of the ratios (A) and (B) is greater than 3.

2. Expanding cylinder according to Claim 1, characterized in that the reinforcing elements (52) are made resistant in terms of tension to internal overpressure.

3. Expanding cylinder according to Claim 1, characterized in that the reinforcing elements (52) are made resistant in terms of compression to external overpressure.

4. Expanding cylinder according to Claim 1, characterized in that the reinforcing elements (52) are made resistant in terms of tension and compression to alternating overpressure from inside and from outside.

5. Expanding cylinder according to Claims 1 to 4, characterized by its use as a pressure accumulator.

6. Expanding cylinder according to Claims 1 to 4, characterized by its use as a pulsation damper.

7. Expanding cylinder according to Claims 1 to 4, characterized by its use as a motive drive means.

8. Expanding cylinder according to Claims 1 to 4, characterized by its use as a pumping working means.

9. Expanding cylinder according to Claims 1 to 4, characterized by its use as a pressure converter.

10. Expanding cylinder according to Claims 1 to 4, characterized by its use as a manipulator.

11. Expanding cylinder according to Claims 1 to 4, characterized by its use as a shock absorber.

12. Expanding cylinder according to Claims 1 to 4, characterized by its use as a spring element.

13. Expanding cylinder according to Claims 1 to 4, characterized by its use as a compensator.

14. Expanding cylinder according to Claims 5 to 13, characterized by its use in an arrangement in which at least one further expanding cylinder is provided.

15. Expanding cylinder according to Claim 14, characterized in that the further expanding cylinder is expandable by means of the expanding cylinder.

16. Expanding cylinder according to Claim 14, characterized in that the further expanding cylinder and the expanding cylinder are expandable independently of one another.

**Revendications**

1. Cylindre de dilatation constitué d'un cylindre creux (1, 2) en matériau élastique à base de caoutchouc dont la section est essentiellement non variable, dont la longueur est élastiquement variable et qui est fermé frontalement par une pièce de fond fixe (3) et par une pièce de fond à mouvement relatif (6, 7), tandis que l'enceinte ainsi formée (10, 11) peut être connectée, au choix, par un orifice d'entrée et de sortie (12, 13) à un raccordement vers l'atmosphère ou vers un fluide pouvant être mis sous pression, tandis que la pièce de fond à mouvement relatif (6, 7) est conçue comme pièce d'entraînement et est pourvue de moyens de guidage pour déterminer sa direction de déplacement en fonction de la dilatation, caractérisé en ce que des éléments d'armature (52) peu dilatables et disposés essentiellement en direction de la périphérie présentent une distance axiale $s_0$ (58) entre eux tandis que le rapport (A) de l'épaisseur de la paroi $t_G$ non sollicitée et de l'épaisseur $d_R$ (57) mesurée en direction radiale des éléments d'armature (52) est supérieur à 2 et que le rapport (B) de la distance axiale $s_0$ (58) des éléments d'armature (52) et de leur diamètre $d_A$ (56) mesuré en direction axiale est supérieur à 1 avec pour condition que le produit des rapports (A)·(B) est supérieur à 3.

2. Cylindre de dilatation selon la revendication 1, caractérisé en ce que les éléments d'armature (52) présentent une rigidité de traction à l'encontre de la surpression intérieure.

3. Cylindre de dilatation selon la revendication 1, caractérisé en ce que les éléments d'armature (52) présentent une rigidité de compression à l'encontre de la surpression extérieure.

4. Cylindre de dilatation selon la revendication 1, caractérisé en ce que les éléments d'armature (52) présentent une rigidité en traction et en compression à l'encontre des surpressions alternées agissant de l'intérieur et de l'extérieur.

5. Cylindre de dilatation selon les revendications 1 à 4, caractérisé par son utilisation comme accumulateur de pression.

6. Cylindre de dilatation selon les revendications 1 à 4, caractérisé par son utilisation comme amortisseur de pulsations.

7. Accumulateur de dilatation selon les revendications 1 à 4, caractérisé par son utilisation comme dispositif moteur d'entraînement.

8. Cylindre de dilatation selon les revendications 1 à 4, caractérisé par son utilisation comme élément de pompage.

9. Cylindre de dilatation selon les revendications 1 à 4, caractérisé par son utilisation comme intensificateur de pression.

10. Cylindre de dilatation selon les revendications 1 à 4, caractérisé par son utilisation comme manipulateur.

11. Cylindre de dilatation selon les revendications 1 à 4, caractérisé par son utilisation comme amortisseur de chocs.

12. Cylindre de dilatation selon les revendications 1 à 4, caractérisé par son utilisation comme élément élastique.

13. Cylindre de dilatation selon les revendications 1 à 4, caractérisé par son utilisation comme compensateur.

14. Cylindre de dilatation selon les revendications 5 à 13, caractérisé par l'utilisation d'une disposition dans laquelle au moins un cylindre de dilatation supplémentaire est prévu.

15. Cylindre de dilatation selon la revendication 14, caractérisé en ce que le cylindre de dilatation supplémentaire peut se dilater à travers le cylindre de dilatation.

16. Cylindre de dilatation selon la revendication 14, caractérisé en ce que le cylindre de dilatation supplémentaire et le cylindre de dilatation peuvent se dilater indépendamment l'un de l'autre.

# Fig. 1

# Fig. 2

# Fig. 3

# Fig. 4

# Fig. 5

# Fig. 6

# Fig. 7

# Fig. 8

# Fig. 9

# Fig. 10

# Fig. 11

# Fig. 12

# Fig. 13

# Fig. 14

Fig. 15

Fig. 16

Fig. 17

Fig. 18

Fig. 19

Fig. 20

Fig. 21

Fig. 22